(19) Europäisches Patentamt / European Patent Office / Office européen des brevets

(11) EP 1 887 270 A1

(12) **EUROPEAN PATENT APPLICATION**

(43) Date of publication:
**13.02.2008 Bulletin 2008/07**

(51) Int Cl.:
*F16L 21/035* (2006.01)

(21) Application number: **07253104.9**

(22) Date of filing: **08.08.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventor: **Bulkovitch, Richard Joseph**<br>**Amston, CT 06231 (US)**<br><br>(74) Representative: **Leckey, David Herbert**<br>**Frank B. Dehn & Co.**<br>**St Bride's House**<br>**10 Salisbury Square**<br>**London EC4Y 8JD (GB)** |
| (30) Priority: **10.08.2006 US 502261** | |
| (71) Applicant: **United Technologies Corporation**<br>**Hartford, CT 06101 (US)** | |

(54) **Assembly including a seal**

(57)     An assembly includes a first member (42) with a reduced lip male gland (54), and a second member (44) with a female bore (64) configured to receive and mate with the reduced lip male gland (54). A spring-energized polymeric seal (45) is disposed between the first and second members (42,44). The male gland (54) of the first member (42) and the female bore (64) of the second member (44) are configured to help lead-in the first member (42) into engagement with the second member (44). The aligning function of the assembly helps decrease damaging contact between the spring-energized polymeric seal (45) and a boss face (60) of the second tubular member (44) when the male gland (54) is introduced into the female bore (64).

Fig. 3A

**Description**

BACKGROUND

The present invention relates to an assembly including a mechanical connection between two members that are configured to contain a fluid. More particularly, the present invention relates to a connection between two fluid-containing members (e.g., tubes), where a spring-energized polymeric seal is positioned between the fluid-containing members, and the fluid-containing members are configured to facilitate axial alignment therebetween without substantially damaging the spring-energized polymeric seal.

An elastomer O-ring is often used as a mechanical seal. Spring-energized polymeric seals ("polymeric seals") are often used in applications involving operating temperatures that are too high for elastomer O-rings because polymeric seals are able to withstand higher operating temperatures, typically temperatures of up to 400 °F (204°C). In one application, the polymeric seal is installed around an outer perimeter of a male gland tubing fitting (positioned at the end of a first tube), which mates with a female bore in a corresponding second tube. Because a polymeric seal is relatively stiff (as compared to an O-ring), the male gland often includes a smaller diameter than the first tube to permit installation of the polymeric seal around the male gland without special tooling. That is, the reduced lip permits the polymeric seal to be installed without requiring excessive stretching of the polymeric seal. The smaller diameter male gland is often referred to as a "reduced lip" male gland. The polymeric seal typically sits within a groove in the reduced lip male gland in order to fix the position of the seal.

After the male gland of the first tube is introduced into the female bore of the second tube, the polymeric seal rests against an angled sidewall of the female bore. The pressure between the male gland tube-fitting and the female bore compresses the seal, thereby creating a seal at the interface between the male gland tube-fitting and the mating tube. The compressed polymeric seal helps retain fluid inside the tubes. A fluidic connection utilizing a spring-energized polymeric seal is used in many applications, including gas turbine applications. For example, in a gas turbine engine, two tubes may be connected to form a tubing assembly that delivers oil to a bearing compartment, fuel to a combustor, or air to pressurize a bearing.

BRIEF SUMMARY

The present invention relates to an assembly including a first fluid-containing member (e.g., a tube) configured to mate with a second fluid-containing member, where a seal, e.g. a spring-energized polymeric seal is disposed between the first and second members. The assembly is configured to help facilitate alignment of the first member with the second member without substantially damaging the spring-energized polymeric seal. Seal damage is typically unknown until the members are pressurized with the fluid. In particular, a male gland of the first member and a female bore of the second member are configured to help decrease damaging contact between the spring-energized polymeric seal and the female bore when the male gland is introduced (or "installed") into the female bore to connect the first and second members.

In an exemplary embodiment of an assembly in accordance with the present invention, a first end portion of a first tubular member includes a main body including a first diameter, a male gland including a first length and a second diameter, and a groove positioned between the main body and the male gland. The first diameter of the main body is greater than the second diameter of the male gland. The groove is configured to receive a spring-energized polymeric seal. A second tubular member includes a boss face defining a female bore configured to mate with the male gland. The female bore comprises an angled wall defining a lead-in angle having a second length in an axial direction and a lead-in width in a radial direction. The first length of the male gland is greater than or equal to the second length, and a difference between the first and second diameters is less than or equal to the lead-in width of the female bore.

BRIEF DESCRIPTION OF THE DRAWINGS

FIG. 1A is a schematic cross-sectional view of a prior art tubing assembly, which includes a first tubular member with a male gland, a spring-energized polymeric seal, and a second tubular member with a female bore, which is configured to receive the male gland of the first tubular member.

FIG. 1B is a schematic cross-sectional view of the prior art tubing assembly of FIG. 1A, where the male gland of the first tubular member is introduced into the female bore of the second tubular member, thereby compressing the spring-energized polymeric seal.

FIG. 1C is a schematic cross-sectional view of the prior art tubing assembly of FIG. 1A, where the male gland of the first tubular member is misaligned with the female bore of the second tubular member, resulting in damaging contact between the spring-energized polymeric seal and the female bore.

FIG. 2 is an exploded perspective view of a tubing assembly in accordance with the present invention, which includes a first tubular member including an elongated male gland and a second tubular member including a female bore with a greater lead-in angle as compared to the prior art tubing assembly of FIGS. 1A-1C.

FIG. 3A is a schematic cross-sectional view of the tubing assembly of FIG. 2.

FIG. 3B is a schematic cross-sectional view of the tubing assembly of FIG. 3A, where the male gland of the first tubular member is introduced into the female bore of the second tubular member, thereby compressing the spring-energized polymeric seal.

FIG. 3C is a schematic cross-sectional view of the tubing assembly of FIG. 2, illustrating a worst-case scenario of misalignment between the elongated male gland of the first tubular member and the female bore of the second tubular member, where no damaging contact between the spring-energized polymeric seal and the boss face of the female bore results.

## DETAILED DESCRIPTION

The present invention applies to mechanical connections between two members configured to contain fluid (e.g., air, water, fuel, or oil), where a spring-energized polymeric seal is disposed between the two members to help seal the interface therebetween. Examples of fluid containing/fluid-handling members are flexible or rigid tubing and piping, and the mechanical connection may be either static (i.e., there is no relative movement between the members) or dynamic (i.e., there is relative movement between the members). While an embodiment is described below in reference to a tubing assembly, it should be recognized that the alignment function provided by the present invention is generally applicable to many different types of mechanical connections having different shapes and sizes. In accordance with the principles of the present invention, a first member may be guided into a second member without substantially damaging (i.e., damage beyond functional usability) the spring-energized polymeric seal that is disposed between the first and second members. The invention eliminates the rework and cost associated with disassembly and reassembly due to a damaged seal, after the members are pressurized with the fluid.

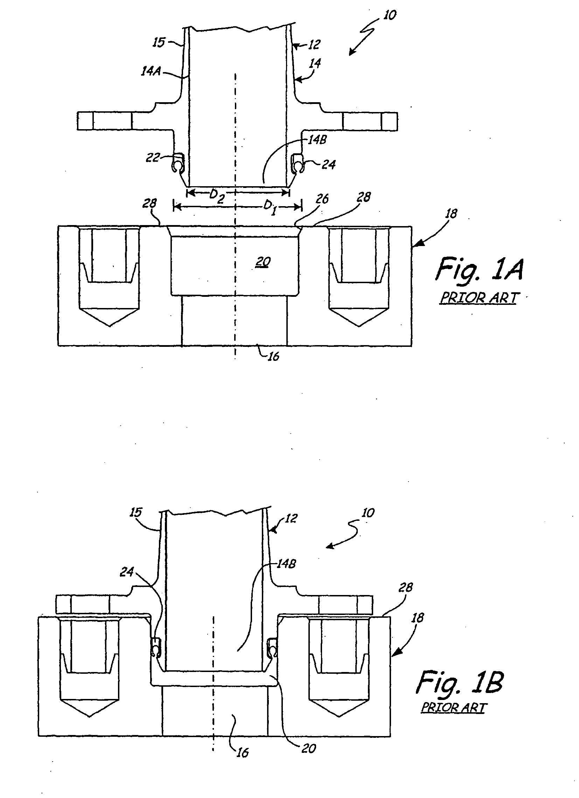

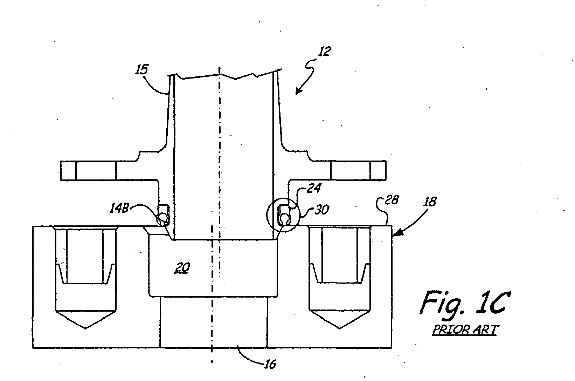

FIG. 1A is a schematic cross-sectional view of prior art tubing assembly 10, which includes first tubular member 12 with tube-fitting 14 fitted around tube 15, and second tubular member 16 with boss 18 defining female bore 20. Tube-fitting 14 is typically a discrete part that is attached to an end of tube 15. Tube-fitting 14 includes main body 14A having diameter $D_1$, and male gland 14B having diameter $D_2$, which is smaller than diameter $D_1$ of main body 14A. Because male gland 14B has a smaller diameter than main body 14A, male gland 14B is referred to as a "reduced lip" male gland. Groove 22 is positioned between main body 14A and reduced lip male gland 14B, and spring-energized polymeric seal 24 is seated within groove 22. As described in the Background section, male gland 14B includes a reduced lip in order to fit polymeric seal 24 around male gland 14B without special tooling or permanent deformation of polymeric seal 24. Female bore 20 of second tubular member 16 includes angled sidewall 26.

In order to mate and fluidically connect first tubular member 12 with second tubular member 16, male gland 14B of first tubular member 12 is introduced into female bore 20 of second tubular member 16, as shown in FIG. 1B. As FIG. 1 B illustrates, after first and second tubular members 12 and 16 are mated together, polymeric seal 24 is compressed against female bore 20 to form a substantially fluid-impermeable seal between first and second tubular members 12 and 16.

When mating male gland 14B with female bore 20, it is typically desirable to minimize contact between polymeric seal 24 and boss face 28 of second tubular member 18 in order to minimize damage to polymeric seal 24. However, it has been found that with many existing designs incorporating reduced lip male gland 14B, damaging contact between polymeric seal 24 and boss face 18 may occur. Damaging contact may occur if first tubular member 12 (and thus, tube-fitting 14) is misaligned with second tubular member 18, as shown in region 30 of FIG. 1C. Such misalignment and damaging contact is much more likely to occur during blind assemblies, when male gland 14B of first tubular member 14 is guided into female bore 20 of second tubular member 18 with little to no visibility of male gland 14B and female bore 20. Unfortunately, such damage is unknown until the members are pressurized with the fluid.

A tubing assembly in accordance with the present invention helps minimize damaging contact between a spring-energized polymeric seal (24) positioned around a first tubular member and a boss face (28) of a mating tubular member as illustrated in FIG. 1C. This is achieved by increasing the tolerated amount of misalignment between first and second tubular members before damaging contact occurs. The possibility of the polymeric seal contacting the boss face of a mating tubular member is also minimized by improving piloting features of the first tubular member.

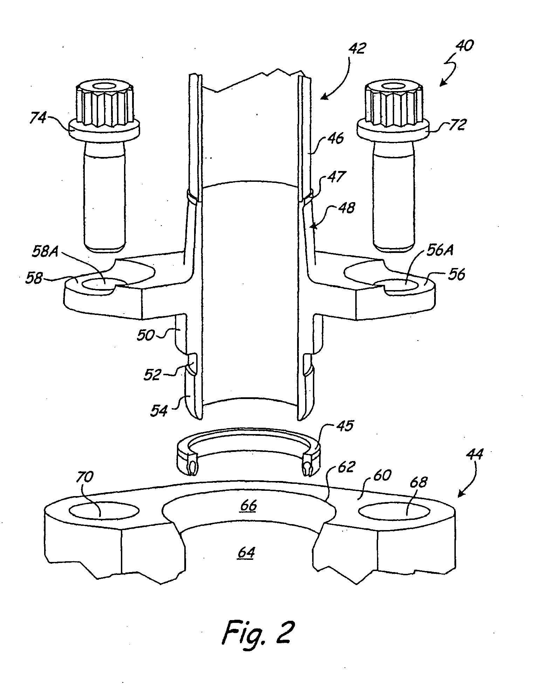

FIG. 2 is an exploded perspective view of a tubing assembly 40 or plumbing connection in accordance with a preferred embodiment of the present invention, where a part of tubing assembly 40 has been cut away for clarity of illustration. Tubing assembly 40 includes first tubular member 42, a second tubular member 44, and spring-energized polymeric seal 45. First and second tubular members 42 and 44 may each be any member that is used to contain fluid, and in some cases, deliver fluid from one point to another, such as flexible or rigid tubing, ducting, piping, etc. In the present invention, spring-energized polymeric seal 45 is any seal including a spring fully or partially enclosed in a jacket, where the spring may be any type of spring, such as a helical spring. Spring-energized polymeric seal 45 may have any suitable cross-section, such as a U-shape or a V-shape cross-section.

First tubular member 42 includes tube 46 and tube-fitting 48 fitted around tube 46. In the embodiment shown in FIG. 2, tube-fitting 48 is welded to an end of tube 46 at joint 47. However, in an alternate embodiment, tube-fitting 48 is attached to an end of tube 46 using another suitable means, such as a mechanical attachment, brazing or an adhesive, and in yet another alternate embodiment, tube-fitting 48 is integrally formed with tube 46. Tube-fitting 48 includes main body 50, groove 52, reduced lip male gland 54, and first and second flanges 56 and 58 extending from main body 50. Groove 52 is configured to receive polymeric seal 45. First flange 56 includes opening 56A, and second flange 58 includes opening 58A. While flanges 56 and 58 are shown to be integral with tube-fitting 48, in an alternate embodiment, flanges 56 and 58 may be attached to tube-fitting 48 using any suitable means, such as an adhesive, mechanical attachment means, brazing or welding.

Second tubular member 44 includes boss face 60 defining opening 62 into female bore 64, which includes angled sidewall 66. Boss face 60 further defines first bolt aperture 68 and second bolt aperture 70.

First and second tubular members 42 and 44 are configured to attach to one another using a mechanical attachment means. More specifically, when tubing assembly 40 is assembled, bolt 72 extends through first opening 56A in first flange 56 of tube-fitting 48 and into bolt aperture 68 in boss face 60 of second tubular member 44. A nut or other securing mechanism may then be attached to bolt 72 (on an opposite side of boss face 60 from flange 56A) to secure bolt 72 in place and secure first tubular member 42 to second tubular member 44. Similarly, bolt 74 extends through second opening 58A in second flange 58 of tube-fitting 48 and into bolt aperture 70 in boss face 60 of second tubular member 44. A fastening mechanism may then be attached to bolt 74 to secure bolt 74 in position and further secure first and second tubular members 42 and 44 together. In alternate embodiments, other means of securing first and second tubular members 42 and 44 may be used, such as other mechanical attachment means (e.g., a snap-fit, rivets, etc.), adhesive, brazing, welding, and so forth.

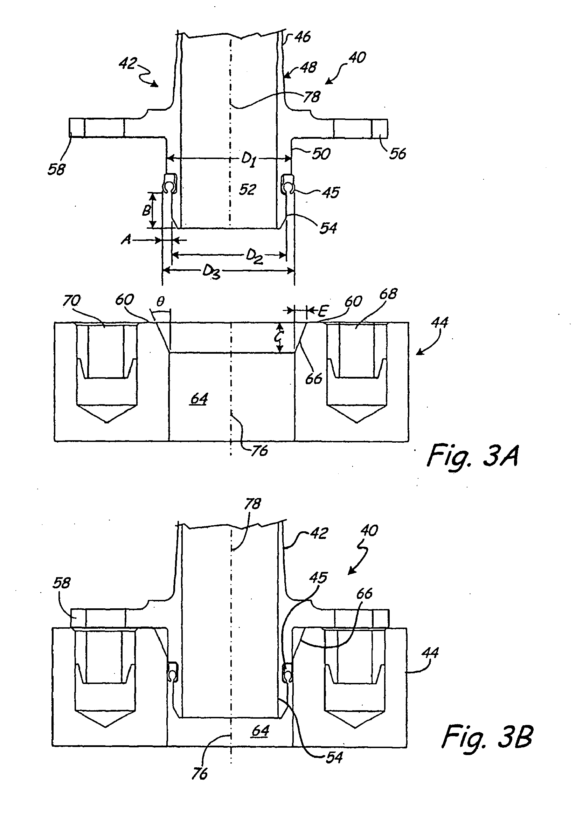

Male gland 54 of first tubular member 42 is introduced into female bore 64 in order to fluidically connect first and second tubular members 42 and 44. The polymeric seal 45, which sits within groove 52 in tube-fitting 48 of first tubular member 42 when tubing assembly 40 is assembled, seals an interface between first and second tubular members 42 and 44. Specifically, after male gland 54 is introduced into female bore 64, polymeric seal 45 is compressed between male gland 54 and female bore 64 (as shown in FIG. 3B). When compressed, polymeric seal 45 is substantially fluid impermeable, thereby preventing the escape of fluid through the interface between first and second tubular members 42 and 44.

As previously described, in existing connections between two tubular members incorporating a reduced lip male gland and a female bore, it has been found that damaging contact frequently occurs between a polymeric seal and boss face during assembly, when the male gland is introduced into the female bore. A tubing assembly of the present invention addresses this issue by providing a greater tolerance of misalignment (as compared to prior art tubing assembly 10) when introducing male gland 54 into female bore 64 without damaging contact between polymeric seal 45 and boss face 60. Greater tolerance is achieved by elongating male gland 54 and lengthening angled wall 66. The dimensions and feature relationships of tubing assembly 40 are described in detail in reference to FIG. 3A.

Angled sidewall 66 helps align male gland 54 with female bore 64, and may be referred to as a "lead-in angle." Ideally, longitudinal axis 78 of male gland 54 is aligned with longitudinal axis 76 of female bore 64 when male gland 54 is introduced into female bore 64. In this ideal alignment, polymeric seal 45 does not contact boss face 60 during assembly. However, as previously described, in many applications, such as blind assemblies, it is difficult to align longitudinal axes 76 and 78 of female bore 64 and male gland 54, respectively. When longitudinal axes 76 and 78 are misaligned, male gland 54 may contact angled sidewall 66 of female bore 64 during installation. Angled sidewall 66 is configured to gradually guide (i.e., "lead") male gland 54 into female bore 64.

FIG. 3A is a schematic cross-sectional view of tubing assembly 40 of FIG. 2. Main body 50 of tube-fitting 48 has diameter $D_1$, and male gland 54 has diameter $D_2$. Diameter $D_1$ > diameter $D_2$. When polymeric seal 45 is seated within groove 52 in tube-fitting 48, polymeric seal 45 has diameter $D_3$, where diameter $D_3$ > diameter $D_2$. Dimension A is a diametrical difference between diameters $D_2$ and $D_3$ (i.e., $A = (D_3 - D_2)$). Male gland 54 has length B, which is measured from groove 52 to end 54A of male gland 54.

Angled sidewall 66 of female bore 64 of second tubular member 44 has length C and is oriented an angle θ with respect to longitudinal axis 76 of female bore 64. Radial lead-in width E of sidewall 66 is defined by a product of length C and tangent θ (i.e., $E = (C \times \tan θ)$).

As FIG. 3B illustrates, after male gland 54 is fully mated with female bore 64 (and first tubular member 42 is connected to second tubular member 44), polymeric seal 45 is compressed against female bore 64, thereby sealing an interface between first and second tubular members 42 and 44.

As previously described, it is desirable to minimize contact between polymeric seal 45 and boss face 60 when introducing male gland 54 into female bore 64. Tubing assembly 40 in accordance with the present invention includes the following dimensional relationships, which help minimize the possibility of contact between polymeric seal 45 and boss face 60:

$$A_{MAX} \leq E_{MIN}$$

$$B_{MIN} \geq C_{MAX}$$

$A_{MAX}$, which is maximum difference between diameter $D_2$ of male gland 54 and diameter $D_3$ of polymeric seal 45, is less than or equal to $E_{MIN}$, which is the minimum lead-in width of sidewall 66. As described below, this helps increase the tolerated amount of misalignment before polymeric seal 45 contacts boss face 60 is increased in tubing assembly 40, as compared to prior art tubing assembly 10. In particular, $E_{MIN}$, which is the lead-in width of angled sidewall 66, is greater as compared to prior art tubing assembly 10 in FIGS. 1A-1C, and as a result, boss face 60 is further distanced from female bore 64, which helps ensure there is an adequate minimum clearance between polymeric seal 45 and boss face 60, even when longitudinal axes 76 and 78 are misaligned.

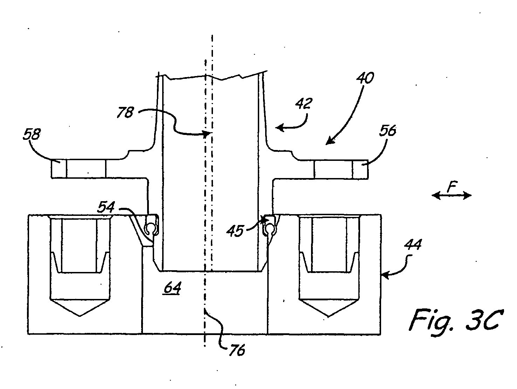

Tubing assembly 40 also exhibits improved piloting features (i.e., features that help align and engage male gland 54 with female bore 64) as compared to prior art male gland 14B of FIGS. 1A-1C due to an elongated male gland 54. This piloting feature is described in further detail in reference to FIG. 3C.

FIG. 3C illustrates a worst-case scenario of misalignment between first tubular member 42 and second tubular member 44 when male gland 54 in introduced into female bore 64. Because of the dimensional relationships in tubing assembly 40, where ($A_{MAX} \leq E_{MIN}$) and ($B_{MIN} \geq C_{MAX}$), even with misalignment between first and second tubular members 42 and 44, male gland 54 is introduced into female bore 54 before polymeric seal 45 contacts boss face 60. In this way, length B of male gland 54 helps ensure male gland 54 begins engaging with female bore 64 before polymeric seal 45 reaches boss face 60. This helps to minimize damaging contact between polymeric seal 45 and boss face 60 because after male gland 54 is introduced into female bore 64, female bore 64 acts as a stop and prevents first tubular member 42 from moving along direction F (which is generally perpendicular to longitudinal axis 78 of male gland 54). In this way, female bore 64 prevents male gland 54 from shifting in an amount sufficient to allow polymeric seal 45 to contact boss face 60.

As previously stated, a tubing assembly in accordance with the present invention is suitable for use in any connection between at least two parts where it is desirable to contain a fluid. For example, in addition to fluid delivery tubing assemblies, a tubing assembly in accordance with the present invention may be used with a bearing compartment in a gas turbine engine.

The terminology used herein is for the purpose of description, not limitation. Specific structural and functional details disclosed herein are not to be interpreted as limiting, but merely as bases for teaching one skilled in the art to variously employ the present invention. Although the present invention has been described with reference to preferred embodiments, workers skilled in the art will recognize that changes may be made in form and detail without departing from the scope of the invention.

**Claims**

1. An assembly comprising:

   a first member (42) including a first end portion (48) comprising:

      a main body (50) including a first diameter ($D_1$);
      a male gland (54) including a first length (B) and a second diameter ($D_2$), wherein the first diameter ($D_1$) is greater than the second diameter ($D_2$); and
      a groove (52) positioned between the main body (50) and the male gland (54);

   a spring-energized polymeric seal (45) seated within the groove (52) and including a third diameter ($D_3$); and
   a second member (44) including a boss face (60) defining a female bore (64) configured to mate with the male gland (54), the female bore (64) comprising an angled wall (66) defining a lead-in angle (θ) having a second length (C) and a lead-in width (E);

   wherein the first length (B) is greater than or equal to the second length (C), and wherein a difference (A) between the second and third diameters ($D_2$,$D_3$) is less than or equal to the lead-in width (E) of the female bore (64).

2. The assembly of claim 1, wherein the first end portion of the first member is a tubing fitting (48) attached to the first member (42).

3. The assembly of claim 1 or 2, and further comprising:

   a flange (56) extending from the first end portion (48) of the first member (42), the flange (56) including a first aperture (56A) configured to receive a fastening apparatus (72);
   a second aperture (68) adjacent to the female bore (64) of the second member (44) and configured to receive the fastening apparatus (72).

4. The assembly of any preceding claim, wherein the first and second members (42,44) are suitable for containing a fluid and are in fluidic communication with each other.

5. A tube-fitting (48) configured to mate with a first tube (44) comprising an opening defined by an angled wall (66) having an angle length (C) and a lead-in width (E), the tube-fitting comprising:

a first portion (50) comprising a first diameter $(D_1)$;
a second portion (54) adjacent to the first portion (48) and comprising a second diameter $(D_2)$ and a first length (B);
a groove (52) positioned between the first and second portions (50,54) and configured to receive a sealing member (45),

wherein a difference (A) between the first and second diameters $(D_1,D_2)$ is less than or equal to the lead-in width (E) of the opening (64) of the first tube (44), and wherein the first length (B) is greater than or equal to the angle length (C) of the opening of the first tube (44).

6. The tube-fitting of claim 5, wherein the first portion (50) of the tube-fitting (48) is configured to attach to a second tube (42).

7. The tube-fitting of claim 5 or 6, and further comprising:

a flange (56) extending from the first portion (50) of the tube-fitting (48), the flange (56) including an aperture (56A) configured to receive a fastening apparatus (72).

8. The tube-fitting of claim 5, 6 or 7, wherein the tube-fitting (48) is suitable for use with a fluid delivery tubing assembly.

9. A plumbing connection comprising:

a first tubular member (42) comprising:

a first portion (50) comprising a first diameter $D_1$;
a second portion (54) adjacent to the first portion (50), extending from a first end to a second end, and comprising a second diameter $D_2$, wherein $D_2 < D_1$;
a sealing member (45) disposed at the first end of the second portion (54) and between the first and second portions (50,54), and comprising a third diameter $D_3$, wherein $D_3 > D_2$ and $(D_3 - D_2) = A$; and
a first length B measured from the sealing member (45) to the second end of the second portion (54);

a second tubular member (44) defining a female bore (64) including a sidewall having a length C and oriented at an angle $\theta$ with respect to a longitudinal axis of the female bore (64), wherein the second portion (54) of the first tubular member (48) is disposed within the female bore (64), the sealing member (45) contacts the sidewall of the female bore, $B \geq C$, and $A \leq (C \times \tan \theta)$.

10. The plumbing connection of claim 9, and further comprising:

a flange (56) extending from the first tubular member (48) and attached to a boss face (60) of the second tubular member (44).

11. The plumbing connection of claim 10, wherein the flange (56) is attached to the boss face (60) with a bolt (72).

12. The plumbing connection of claim 9, 10 or 11, wherein the first and second tubular members (42,44) contain a fluid.

13. The apparatus of any of claims 5 to 12, wherein the sealing member (45) is a spring-energized polymeric seal.

14. The apparatus of any of claims 4, 8 or 12, wherein the fluid is selected from a group consisting of: air, water, fuel, and oil.

*Fig. 1A*
PRIOR ART

*Fig. 1B*
PRIOR ART

*Fig. 1C*
PRIOR ART

Fig. 2

Fig. 3A

Fig. 3B

Fig. 3C

**European Patent Office**

## EUROPEAN SEARCH REPORT

Application Number

EP 07 25 3104

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 076 594 A (BAUGH HOLLIS A [US]) 31 December 1991 (1991-12-31) * column 2, line 29 - column 3, line 39; figures 1,2,4 * ----- | 1-12,14 | INV. F16L21/035 |
| A | DE 35 39 595 A1 (HANSEATISCHE ISOLIERMITTEL GMB [DE]) 14 May 1987 (1987-05-14) * column 1, line 25 - line 65; figure 2 * ----- | 1-12,14 | |
| A | FR 2 598 773 A (SABLA SA [FR]) 20 November 1987 (1987-11-20) * page 7, line 18 - page 10, line 20; figures 1-3 * ----- | 1-13 | |

TECHNICAL FIELDS SEARCHED (IPC)

F16L

The present search report has been drawn up for all claims

| Place of search | Date of completion of the search | Examiner |
|---|---|---|
| The Hague | 6 December 2007 | Mauriès, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 887 270 A1**

**ANNEX TO THE EUROPEAN SEARCH REPORT
ON EUROPEAN PATENT APPLICATION NO.**                    EP 07 25 3104

06-12-2007

| Patent document cited in search report | | Publication date | Patent family member(s) | Publication date |
|---|---|---|---|---|
| US 5076594 | A | 31-12-1991 | NONE | |
| DE 3539595 | A1 | 14-05-1987 | NONE | |
| FR 2598773 | A | 20-11-1987 | NONE | |

EPO FORM P0459